Europäisches Patentamt

European Patent Office

Office européen des brevets

(11) Publication number: **0 274 156 B1**

(12) **EUROPEAN PATENT SPECIFICATION**

(45) Date of publication of patent specification: **13.03.91**   (51) Int. Cl.⁵: **G11B 7/24**

(21) Application number: **87202444.3**

(22) Date of filing: **08.12.87**

(54) Transparent plate for optically readable information carrier.

(30) Priority: **12.12.86 NL 8603167**

(43) Date of publication of application:
**13.07.88 Bulletin 88/28**

(45) Publication of the grant of the patent:
**13.03.91 Bulletin 91/11**

(84) Designated Contracting States:
**AT BE CH DE ES FR GB IT LI NL SE**

(56) References cited:
**EP-A- 0 182 585**

**PATENT ABSTRACTS OF JAPAN, vol. 6, no. 206 (P-149)[1084], 19th October 1982; & JP-A-57 113 432 (MITSUBISHI RAYON K.K.) 14-07-1982**

**PATENT ABSTRACTS OF JAPAN, vol. 7, no. 278 (P-242)[1423], 10th December 1983; & JP-A-58 155 539 (HITACHI SEISAKUSHO K.K.) 16-09-1983**

(73) Proprietor: **STAMICARBON B.V.**
**Mijnweg 1**
**NL-6167 AC Geleen(NL)**

(72) Inventor: **Kasper, Abel**
**De Waarden 331**
**NL-7206 GW Zutphen(NL)**

## Description

The invention relates to a transparent plate for an optically readable information carrier of a material with a three-dimensional network, a process for the production of such a plate and an optically readable information carrier with a transparent plate.

Transparent plates for optically readable information carriers are commonly manufactured from thermoplastic material like polycarbonate (PC) or polymethylmethacrylate (PMMA).

Three different categories of optically readable systems are usually distinguished:

a) 'Read Only Memory' (ROM): the information to be read (a row of small pits) is applied to a transparent substrate in the production process of the plate, after which a reflecting medium is applied. The information can be read by the user only.

b) 'Write Once' or 'Direct Read After Write' (DRAW): guide grooves only are applied to the transparent plate. A reflecting material, for example a metal alloy based on tellurium, is applied to this plate. Information can be written in this material, for example by melting the metal layer locally.

c) 'Erasable' or 'Erasable-DRAW (E-DRAW)': in this system too (guide) grooves are applied to the transparent plate. The plate is then provided with a material into which information can be written which information can also be erased. This can be realized for example by using reversible crystalline-amorphous transitions (phase change) or magneto-optic effects (Kerr effect). Ferromagnetic alloys are being developed for this purpose, such as Gd-Tb-Fe and adapted tellurium alloys.

Information is usually written in the latter two types ('Write Once' and 'Erasable') by 'burning' small pits in the reflecting medium with a laser beam. The laser beam has a different wavelength and is more powerful than the laser used to read the information. In this case the transparent plate must have a rather high glass transition temperature (Tg). This is on account of the temperature which is reached for example when the tellurium is melted in writing the information in the 'Write Once' plates, or on account of the temperature at which a ferromagnetic alloy is demagnetized in the case of the 'Erasable' plates. The Tg of polycarbonate (almost 150¤C) is sufficient for many applications; the Tg of polymethylmethacrylate (around 100¤C), however, is not.

The optical properties of the transparent substrate are also of great importance. The transparency must be such that more than 85% of the light is transmitted (in the relevant wave length range), because the information carriers to be ultimately obtained must preferably reflect 75% of the light.

In addition to this, there must be hardly any double refraction. Double refraction is the sum of two contributions:

a) Orientation double refraction: thermoplastic polymer molecules in particular are oriented with respect to each other as they flow into a mould. When the mould is full, the mass is cooled quickly so that the molecules are unable to relax, as a result of which they are frozen in the oriented condition.

b) Stress double refraction: non-homogeneous cooling or shrinkage during the curing process which is not uniform in all directions may cause stress in a plate, leading to irregularities in transmission through the plate and thus to irregularities in reflection.

In general, the orientation of molecules occurring in thermoplastics appears to contribute most to double refraction.

A further important requirement is the dimensional stability of the plate, for example in the case of moisture absorption.

Neither of the thermoplastics PC and PMMA can meet the aforementioned requirements: PMMA presents too great a change in dimensions in the case of moisture absorption and has a too low Tg. Plates of PC appear to present too much double refraction, particularly plates with large diameters (20-30 cm).

Inorganic glass is also used as substrate for 'Read Once' plates. The glass plates are provided with a coating, to which the guide grooves are applied (see e.g. EP-A-182585). These glass plates are however heavy and fragile.

As a solution for these problems EP-A-144 705 suggests the use of epoxy resins for a transparent plate for information carriers. Thermosetting plastics hardly present orientation double refraction because the relatively small polymers relax quickly on the relatively low-viscous resin mixture. In addition, the Tg of the cured resins is sufficient for the applications mentioned above, provided that the appropriate structural elements are used. However, it takes a relatively long time for epoxy resins to set. Since production must take place in an area entirely free from dust, and a long production time would considerably increase the manufacturing costs, the slow reaction is a major disadvantage. In addition, it is apparent from EP-A-144 705 that plates produced from epoxy resins are too soft, which means that the plate must be provided with a coating before the reflecting medium can be applied.

The invention provides a solution for this problem. The transparent plate for an optically readable

2

information carrier of a material with a three-dimensional network according to the invention is characterized in that the three-dimensional network consists of a cured mixture based on a polyester comprising at least two $\alpha$-$\beta$ ethylenic unsaturations and having a molecular weight of at least 500 and a compound containing one or more vinyl groups.

The use of a dimethacrylate as thermosetter is described in JP-A-58108042. However, considerable shrinkage occurs in the polymerization of this type of acrylates, which presents a difficulty in the production of precision plates. According to JP-A-58108042, an extra coating is required for the application of information and it takes a long time for the substrate to set (7 hours). EP-A-182585 describes the use of bisphenol-A based acrylates as carrier for optical discs. The heat resistance temperature is 110-115¤C, which is not sufficient for all purposes.

The transparent plate according to the invention is usually between 0.5 and 5.0 mm thick, preferably between 1.0 and 1.5 mm and in particular about 1.2 mm, because that is the thickness of the plates used currently for optically readable information carriers. The diameter of the normally circular plates is usually between 10 and 35 cm, in particular about 12, 13 or 30 cm. Larger and smaller plates are, however, technically possible. Since the orientation double refraction of thermoplastics increases as the diameter increases, the invention is applied with advantage particularly in the case of larger plates (e.g. with diameters of 30 cm).

The optically readable information carrier according to the invention consists of at least a transparent plate of a material with a three-dimensional network, which plate, one side of which is provided with a reflecting medium, is characterized in that the three-dimensional network consists of a cured mixture based on a polyester comprising at least two $\alpha$-$\beta$ ethylenic unsaturations and having a molecular weight of at least 500 and a compound containing one or more vinyl groups.

The transparent plate may itself contain information, for example in the form of rows of small pits, or may be provided with guide grooves for 'Write' Once and 'Erasable' type plates, but, if so desired, having no information or grooves itself, it may also be provided with a coating to which information or guide grooves can be or are applied. An extra coating is not normally required, however, the transparent plate, in a preferred embodiment of the invention already containing information, or already having grooves, and the plate being suitable for direct application of the reflecting medium.

The distance between the centre of the guide grooves and/or the rows of small pits is usually about 1.6 $\mu$m. The pits are about 0.5 $\mu$m wide. The depth of the pits is about 1/4 $\lambda$, $\lambda$ being the wavelength of the laser beam in the plate in reading the information. In practice, however, the wavelength of the laser beam is between 300 and 1000 nm, more in particular between 350 and 800 nm. The present reading equipment employs a laser beam which is focussed to a point with a diameter of about 1 $\mu$m. However, these values are only those required at present. In principle, smaller and greater distances and differences in height than those mentioned here are also possible.

The side of the transparent plate to which the pits or grooves have been applied is subsequently provided with a reflecting medium. The reflecting medium is usually a metal (alluminium, silver or copper) or a metal alloy, for example based on selenium, bismuth or tellurium. It is, however, also possible to use organic substances (pigments) as reflecting medium. A protective layer is often applied to the reflecting medium. This protective layer is in many cases a hard coating based on a UV-curable acrylate resin, but other coatings may also be used.

If an information carrier that can be read on two sides is desired, two transparent plates with reflecting media, preferably also provided with protective coatings, can be glued together.

The process for the production of a transparent plate according to the invention comprises introducing a curable material into a mould and then curing it by polymerization and is characterized in that a material based on a polyester comprising at least two $\alpha$-$\beta$ ethylenic unsaturations and having a molecular weight of at least 500 and a compound containing one or more vinyl groups is used as curable material and that the curable material is cured by means of radical polymerization.

An unsaturated polyester, but also polyesters with acrylate derivatives as end groups, the so-called vinyl ester polymers, may be used as polymer. Mixtures of polymers may, of course, also be used.

The polymer is preferably extremely reactive so that a high reaction rate can be realized. The molecular weight per double bond is preferably less than 400, in particular less than 300.

The weight average molecular weight of the polymer is preferably between 500 and 8000, more in particular between 500 and 6000 and most particularly between 700 and 4000.

The acid number of the polymer is usually between 0 and 100, preferably between 0 and 50, in particular between 1 and 25.

The hydroxyl number of the polymer is usually between 0 and 200, preferably between 1 and 100, in particular between 1 and 50. The hydroxyl and acid numbers are defined as mg KOH per gram of polymer, according to ASTM E 222-73 and ASTM D 1639-70, respectively.

The unsaturated polymers are substantially synthesized from organic compounds containing carboxyl and alcohol groups. Usually diacids and dialcohols are used for polyesters; at most 40% of both types of di-functional monomers may, however, be replaced by higher-functional monomers or mono-functional monomers or mixtures hereof. Preferably, less than 20 wt% of both types of di-functional monomers is replaced by a higher-functional monomer. More in particular, 3-10 wt% of one of the two types of difunctional monomers is replaced by a tri-functional monomer in order to obtain an unsaturated polyester with side-branches. This results in a higher molecular weight in a shorter amount of time.

Preferably, at least one ethylenic unsaturated diacid is used. It may be advantageous to terminate the polyester with an unsaturated monocarboxylic acid.

The vinylester polymers form a special class of polyesters. Vinylester polymers are composed of polyols and, possibly, polyacids terminated with acrylate groups, methacrylate groups or other acrylates substituted with C2-C4 alkyl groups at the $\beta$ position. The polyols may be OH-terminated polyesters, novolak resins, or polyethers, or, for example, semi-esters or polyols modified with epoxy, isocyanate, polyamine, etc.

The acids that may be used usually contain less than 30 carbon atoms, in particular less than 20, more in particular less than 10 carbon atoms.

An $\alpha,\beta$-ethylenic unsaturated diacid is preferably used as ethylenic unsaturated diacid, for example a diacid chosen from the group comprising fumaric acid, maleic acid, chlorine maleic acid, itaconic acid, methylglutaric acid, mesaconic acid, citraconic acid or the corresponding esters or anhydrides.

An ethylenic unsaturated mono- or triacid may, for instance, be chosen from the group comprising linolic acid, or the other unsaturated fatty acids, cinnamic acid, atropic acid, acrylic acid, methacrylic acid, ethacrylic acid, propacrylic acid, crotonic acid, isocrotonic acid, or corresponding ester or anhydride derivatives.

Other diacids are preferably saturated aliphatic or aromatic diacids. Aliphatic and aromatic diacids are, for example, chosen from the group comprising succinic acid, glutaric acid, methylglutaric acid, adipic acid, sebacic acid, pimelic acid, phthalic acid, isophthalic acid, terephthalic acid, dihydrophthalic acid, tetrahydrophthalic acid, tetrachlorophthalic acid, 3,6-endomethylene-1,2,3,6-tetrahydrophthalic acid and hexachloro-endomethylenetetrahydrophthalic acid or the corresponding ester or anhydride derivatives.

Preferably, 5-50% aromatic carboxylic acids are used to obtain optimum mechanical properties.

Mono- and/or higher-functional aromatic or aliphatic carboxylic acids are, for example, chosen from the group: benzoic acid, ethylhexane acid, mono- or trimeric fatty acids like stearic acid, acetic acid, propionic acid, pivalic acid, valeric acid, trimellitic acid, 1,2,3,4-butanetetracarboxylic acid, 1,2,4,5-benzenetetracarboxylic acid, 1,4,5,8-naphthalenetetracarboxylic acid, 1,2,3-propanetricarboxylic acid, 1,2,3-tricarboxylic butane, camphoric acid, naphthoic acid, toluyl acid, or the corresponding ester or anhydride derivatives.

The alcohols that may be used normally contain less than 30 carbon atoms, in particular less than 20 carbon atoms. Preferably saturated aliphatic alcohols or alcohols containing an aromatic group are used; ethylenic unsaturated alcohols may also be used. Dialcohols are for example chosen from the group: ethylene glycol, di(ethylene glycol), tri(ethylene glycol), 1,2-propanediol, 1,3-propanediol, 1,2 butanediol, 1,3-butanediol, 1,4-butanediol, 2-methyl-1,3-propanediol, 1,4-pentanediol, 1,4-hexanediol, 1,6-hexanediol, 2,2-dimethylpropanediol, cyclohexanediol, 2,2-bis-(hydroxycyclohexyl)-propane, 1,2-trimethylolpropanemonoallylether, pinacol, 2,2,4-trimethylpentanediol-1,3, 3-methylpentanediol-1,5, bisphenol A ethoxylated or propoxylated with 1-3 equivalents, and novolak prepolymers, if required partially etherified and ethoxylated. Instead of a 1,2-diol, the corresponding oxirane compound may be used.

Mono- and higher-functional alcohols are, for example, chosen from the group comprising methanol, ethanol, 1- or 2-propanol, 1-or 2-butanol, one of the isomers of pentanol, hexanol, octanol, 2-ethylhexanol, fatty alcohols, benzylalcohols, 1,2-di(allyloxy)-3-propanol, glycerol, 1,2,3-propanetriol; pentaerythritol, tris-(hydroxyethyl)isocyanurate and novolak prepolymers, if required partly etherified and ethoxylated. Instead of 1,2-diol, the corresponding oxirane compound may be used.

It is also possible to choose di- and/or higher-functional alcohols with more than 30 carbon atoms. These preferably have molecular weights of less than 5000, more in particular less than 2000, but more than 400. Di- and/or higher-functional alcohols with molecular weights higher than 400 are, for example, chosen from the group comprising polyethylene glycols, polypropylene glycols, addition products of ethylene oxide and/or propylene oxide with bisphenol A, or phenol-formaldehyde (pre)polymers, preferably epoxidated.

Preferably an unsaturated polyester modified with dicyclopentadienyl (DCPD) units is used. This is because the latter increases the Tg of the object produced. Preferably an unsaturated polyester with 2-45 wt%, more in particular with 20-35 wt% DCPD is used. The polymer can also be modified with imide- and/or amide groups to further raise the Tg. Diamines and alcohol amines can be used for this purpose.

The polyesters comprising at least two $\alpha$-$\beta$ ethylenic unsaturations having a molecular weight of at least 500 can be produced in many ways, for example by melt condensation, solvent condensation with removal of water by means of distillation, whether or not in an azeotropic mixture, by epoxy-acid reactions and other methods known in the art. Vinyl ester polymers can also be produced as described in US-A-3179623, US-A-3301743, US-A-3367992 and US-A-3947422.

Preferably 10-80 wt% polymer is used, in particular 20-70 wt% of the curable mixture.

The compound containing one or more vinyl groups usually contains less than 50 carbon atoms, preferably less than 30, and more in particular less than 15, but more than 3 carbon atoms. The compound containing one or more vinyl groups is preferably liquid at room temperature, so that the resin/monomer mixture has a low viscosity at room temperature. However, since the resin/monomer mixture can also be processed at higher temperatures, this is by no means necessary. Preferably the compound containing one or more vinyl groups is of the vinyl aromatic, vinyl ether, vinyl ester, acrylate and/or allyl type. More in particular, an acrylate- or vinyl aromatic compound is used, because these react quickly in the polymerization reaction.

Vinyl aromatic compounds are, for example, chosen from the group comprising styrene, $\alpha$-methylstyrene, o-, m-, p-methylstyrene, p-chlorostyrene, t-butylstyrene, divinyl benzene, bromine styrene, vinylnaphthalene, $\alpha$-chlorostyrene and divinylnaphthalene.

Acrylate compounds are preferably chosen from the group comprising methyl-, ethyl-, propyl-, isopropyl-, butyl-, isobutyl-, phenyl- or benzylacrylate and -methacrylate, 2-ethylhexyl(meth)acrylate, dihydrodicyclopentadieneacrylate, cyclohexyl(meth)acrylate, butanediol(meth)acrylate, (meth)acrylamide, butanedioldi(meth)acrylate, the reaction products of (meth)acrylic acid and phenyl- or cresylglycidyl ethers, propylene glycol di(meth)acrylate, di- and trietylene glycol di(meth)acrylate, di- and tripropylene glycol di-(meth)acrylate, hexanedioldi(meth)acrylate, trimethylolpropanetri(meth)acrylate. Derivatives of acrylates substituted with C2-C4 at position $\beta$ can also be used.

Vinyl ether, vinyl ester and allyl compounds are, for example, chosen from the group comprising allyl phthalate, triallyl cyanurate, diallyl isophthalate, diallyl terephthalate, diallyl phthalate, ethylhexanoic acid vinyl ester, vinyl acetate, vinyl propionate, vinyl pivalate, vinyl ether, vinyl propylol ether, vinyl butylol ether and vinyl benzyl alcohol ethers.

Preferably, the compound containing one or more vinyl groups is used in 20-90 wt%, in particular 30-80 wt% of the curable mixture.

In addition, the transparent plate preferably contains one or more antioxidants like hydroxybenzophenone, esters of salicylic acid and hydroxyphenylbenzotriazoles.

The curable mixture preferably contains releasing agents which do not affect the optical properties of the transparent plate too much, such as PAT 667R manufactured by 'E und P Würtz'.

In addition, the curable mixture preferably also contains 0.005-0.2, preferably 0.01-0.1 wt% with respect to the curable mixture, of one or more inhibitors. Known inhibitors that may be used are: hydroquinone, 2,6-dimethylhydroquinone, p-t-butylcatechol, p-benzoquinone, chloranil, 2,6-dimethylquinone, nitrobenzene, m-dinitrobenzene, thiodiphenylamine, salts of N-nitro-N-cyclohexylhydroxylamine, 2,3-dichloro-5,6-dicyano-p-benzoquinone, copper naphthanate, 1,2-naphthoquinone.

The radical polymerization in the mould can be initiated in many ways, for example with a chemical initiator system, but also with an electron beam cannon. The chemical initiator system is based on the generation of radicals via thermal, catalytic or photochemical decomposition.

Preferably, a photo-initiator system is used, because this can effect controlled and rapid curing. Many types of photo-initiator systems may be used, such as those described in, for example, DE-A-1694149, US-A-3715293, EP-A-7086, US-A-4071424, EP-A-185423 and EP-A-97012. Photoinitiator systems are usually used in amounts between 0.01 and 10 wt%, preferably between 0.1 and 4 wt%, photoinitiator systems are used.

Preferably a system sensitive to light with a wavelength of 280-800 nm, preferably 360-500 nm and more in particular 380-460 nm, is used.

However, a thermally sensitive initiator system, of which 0.1-5 wt% is usually used, is also suitable, but, in general, it then takes slightly longer for the polymerization to begin. A thermally sensitive initiator system may be cold-setting or hot-setting, and is preferably chosen from the group comprising peroxides, perketals and percarbonates. Examples are hydrogen peroxide, benzoyl peroxide, t-butyl peroxide, t-butyl peractoate, t-butyl perbenzoate, dicumyl peroxide, di-t-butyl peroxide, trimethylcyclohexanone perketal, methyl ethyl ketone peroxide, acetylacetone peroxide, cyclohexanone peroxide, methyl isobutyl ketone peroxide and diacetone alcohol peroxide. In addition, catalysts may be added, for instance octoates or naphthenates of copper, lead, calcium, magnesium, cerium and in particular of manganese and cobalt, or vanadium complexes. Promotors like acetylacetone may also be added to these accelerators. Aromatic amines such as dimethylaniline, diethylaniline or dimethylparatoluidine may also be used as catalysts.

Preferably, the transparent plate is manufactured by causing the curable mixture, comprising a light-sensitive initiator system, to polymerize in the mould under the influence of light for at most 15 minutes, preferably less than 10, in particular less than 5 minutes. One half of the mould is transmittable to radiation with a wavelength range corresponding to the active wavelength range of the photoinitiator system used. Curing in the mould may be followed by after-curing outside of the mould, usually for 1 hour at the most, preferably for less than half an hour, more in particular less than 15 minutes, in which the polymerization in aftercuring can be advanced with the help of a thermally sensitive initiator system. This thermal after-curing is preferably effected at a temperature between 120 and 240¤C, in particular between 140 and 200¤C.

The temperature of the mould is between 20 and 280¤C, preferably between 40 and 160¤C. This temperature is on the one hand realized by the intense light beams and the reaction heat released, but can also be maintained by means of externally supplied heat.

The invention is further elucidated in the examples, without being limited thereto.

Examples

Polymers

Polymer 1 was prepared in a manner known per se via condensation polymerization of 18.1 wt% isophthalic acid, 36.1 wt% fumaric acid, 21.3 wt% propylene glycol and 24.5 wt% neopentyl glycol. The resin had a molecular weight per double bond of 350 and an average molecular weight of about 3000.

Polymer 2 was prepared via condensation polymerization with azeotropic removal of water with xylene and addition of DCPD from 43.5 wt% maleic anhydride, 21.4 wt% ethylene glycol and 35.2 wt% DCPD. The molecular weight of the resin per double bond was 240 and the average molecular weight was about 3500.

Examples I-XXIX

The materials based on an unsaturated polymer and a monomer containing one or more vinyl groups according to Table 1 were, successively, introduced into a mould consisting of a nickel plate with small pits and 0.13 μm high and 0.5 μm wide grooves, spaced 1.6 μm apart, a Teflon ring of 1.0 mm with an inside diameter of 13 cm and a passage, and a glass plate.

## T A B L E   1

| Resin | Polymer | | Monomer | | | Divinyl |
|-------|---------|-----|---------|--------------|------------------|---------|
|       | No.     | %   | Styrene | Vinyl toluene | Diallyl phthalate | benzene |
| 1     | 1       | 56  | 44      |              |                  |         |
| 2     | 2       | 62  | 38      |              |                  |         |
| 3     | 2       | 59  | 41      |              |                  |         |
| 4     | 2       | 61  |         | 39           |                  |         |
| 5     | 2       | 60  |         |              | 40               |         |
| 6     | 2       | 59  |         |              |                  | 41      |
| 7     | 2       | 60  | 20      |              |                  | 20      |

Curing was effected in one or two phases with the initiator systems, temperatures, times and light intensities as indicated in Table 2. After-curing took place between two chrome plates.

## T A B L E   2

| Curing Example | Resin | Initiator system* | Temperature 1st phase | Temperature 2nd phase | Time 1st phase | Time 2nd phase | Light intensity 1st phase** |
|---|---|---|---|---|---|---|---|
| I | 1 | A | 20° | 100° | 2 hr | 4 hr | - |
| II | 2 | B | 20° | 100° | 2 hr | 4 hr | - |
| III | 3 | D | 60° | 180° | 30' | 20' | 400 W, 25 cm |
| IV | 4 | D | 20° | 180° | 30' | 20' | 400 W, 25 cm |
| V | 4 | E | 20° | 180° | 1' | 10' | 2 kW, 40 cm |
| VI | 4 | E | 20° | 180° | 2' | 10' | 400 W, 25 cm |
| VII | 5 | D | 60° | 180° | 30' | 20' | 400 W, 25 cm |
| VIII | 6 | D | 60° | 180° | 30' | 20' | 400 W, 25 cm |
| IX | 7 | D | 60° | 180° | 30' | 20' | 400 W, 25 cm |
| X | 4 | E | 20° | - | 5' | - | 400 W, 25 cm |
| XI | 3 | F | 20° | 180° | 10' | 15' | 400 W, 25 cm |
| XII | 4 | F | 20° | 180° | 10' | 15' | 400 W, 25 cm |
| XIII | 5 | F | 20° | 180° | 10' | 15' | 400 W, 25 cm |
| XIV | 6 | F | 20° | 180° | 10' | 15' | 400 W, 25 cm |
| XV | 7 | F | 20° | 180° | 10' | 15' | 400 W, 25 cm |
| XVI | 4 | E | 20° | 180° | 2' | 10' | 2 kW, 35 cm |
| XVII | 4 | E | 20° | - | 10' | - | 400 W. 25 cm |
| XVIII | 4 | E | 20° | - | 30' | - | 400 W, 25 cm |
| XIX | 4 | E | 20° | 180° | 10' | 10' | 400 W, 25 cm |
| XX | 4 | E | 20° | 180° | 10' | 30' | 400 W, 25 cm |
| XXI | 4 | E | 20° | 180° | 30' | 120' | 400 W, 25 cm |

Initiators

A: 2 wt% 50% methyl ethyl ketone peroxide, 0.5 wt% cobalt octoate in dibutylphthalate (1 % Co),
B: as A with 1 wt% tertiary butyl perbenzoate,
C: 0.5 wt% cobalt octoate in dibutylphthalate (1 % Co), 0.8 wt% tertiary butyl isononanoate, 0.2 wt% acetylacetone
D: 0.35 wt% benzil, 2.0 wt% dimethylaminoethylmethacrylate, 1.0 wt% tertiary butyl perbenzoate
E: 0.5 wt% benzil, 2.0 wt% N,N,N',N'-tetramethylethylenediamine 1.0wt% tertiary butyl perbenzoate
F: 0.5wt% benzil, 2.0 wt% dimethylaminoethylmethacrylate.

** Indicated are the capacity of the lamp and the distance to the plate. The 400 W lamp was a UVASPOTR 400 G lamp of Dr Hönle with a maximum emission at 420 nm. The 2 kW lamp was a UVASPOTR 2000 F lamp of Dr Hönle.

The plates obtained were suitable for optically readable information carriers, since they lacked stress and transmitted the light well (more than 85% transmission).

Of a number of 2 mm thick plates produced according to the data in Table 2 the flexural strength and E-modulus were determined. The results are presented in Table 3.

## T A B L E 3

| Example | corresponding example | flexural strength N/mm$^2$ | E modulus N/mm$^2$ (.10$^3$) |
|---------|----------------------|----------------------------|------------------------------|
| XXII | X | 66 ± 6 | 1.7 ± 0.2 |
| XXIII | XVII | 85 ± 5 | 2.4 ± 0.3 |
| XXIV | XIII | 98 ± 5 | 2.8 ± 0.1 |
| XXV | XIX | 99 ± 4 | 3.0 ± 0.7 |
| XXVI | XX | 103 ± 10 | 3.2 ± 0.2 |
| XXVII | XXI | 107 ± 5 | 3.1 ± 0.1 |
| XXVIII | XVI | 87 ± 4 | 2.5 ± 0.4 |

From this, in particular example XXVIII, it is apparent that it is possible to produce plates with good mechanical properties very quickly.

Examples XXIX-XXXIII

On the analogy of examples I-XXI, plates with a diameter of 30 cm were produced by using a Teflon ring with that inside diameter and a thickness of 1.2 mm. Resin 5 was mixed with initiator system E and subsequently cured according to the data in Table 4.

## T A B L E 4

| Example | temperature | | time | | light intensity |
|---------|-------------|-----------|-----------|-----------|-----------------|
| | 1st phase | 2nd phase | 1st phase | 2nd phase | 1st phase |
| XXIX | 20¤ | 180¤ | 30' | 60' | 400 W 25 cm |
| XXX | 20¤ | - | 10' | - | 400 W 25 cm |
| XXXI | 20¤ | 180¤ | 3' | 60' | 400 W 25 cm |
| XXXII | 20¤ | 180¤ | 30'' | 60' | 2 kW 40 cm |
| XXXIII | 20¤ | 180¤ | 3' | 60' | 2 kW 80 cm |

The plates hardly presented double refraction and transmitted a high percentage of the light.

## Claims

1. Transparent plate for an optically readable information carrier of a material with a three-dimensional network, characterized in that the three-dimensional network consists of a cured mixture based on a polyester comprising at least two $\alpha,\beta$-ethylenic unsaturations and having a molecular weight of at least 500, and a compound containing one or more vinyl groups.

2. Plate according to claim 1, characterized in that the polymer has a molecular weight per double bond of less than 400.

3. Plate according to either one of claims 1-2, characterized in that a polyester modified with 20-35 wt% DCPD is used as polymer.

4. Plate according to any one of claims 1-3, characterized in that the compound containing one or more vinyl groups is a vinyl aromatic or acrylate compound with less than 30 carbon atoms.

5. Plate according to any one of claims 1-4, characterized in that the compound containing one or more vinyl groups is liquid at room temperature.

6. Process for the production of a transparent plate by introducing a curable material into a mould and curing this by polymerization, characterized in that a material based on a polyester comprising at least two $\alpha,\beta$-ethylenic unsaturations and having a molecular weight of at least 500 and a compound containing one or more vinyl groups is used as curable material and that the mixture is cured by means of radical polymerization.

7. Process according to claim 6, characterized in that the radical polymerization is initiated by a light-sensitive chemical initiator system.

8. Process according to claim 6, characterized in that the radical polymerization is initiated by a temperature-sensitive chemical initiator system.

9. Process according to any one of claims 6-8, characterized in that the curable material comprises a light-sensitive initiator system and a temperature-sensitive initiator system and is cured in the mould for less than 10 minutes with the help of light and is then after-cured outside of the mould for at most half an hour at a temperature between 120¤C and 240¤C.

10. Optically readable information carrier comprising a transparent plate of a material with a three-dimensional network, one side of which is provided with a reflecting medium, characterized in that the three-dimensional network consists of a cured mixture based on a polyester comprising at least two $\alpha,\beta$-ethylenic unsaturations and having a molecular weight of at least 500 and a compound containing one or more vinyl groups.

## Revendications

1. Plaque transparente pour un support d'information lisible par voie optique en une matière ayant un réseau tridimensionnel, caractérisée en ce que le réseau tridimensionnel consiste en un mélange durci à base d'un polyester comprenant au moins deux insaturations alpha, bêta-éthyléniques et ayant une masse moléculaire d'au moins 500 et un composé contenant un (ou plusieurs) groupe vinylique.

2. Plaque selon la revendication 1, caractérisée en ce que le polymère présente une masse moléculaire par double liaison inférieure à 400.

3. Plaque selon la revendication 1 ou 2, caractérisée en ce qu'on utilise en qualité de polymère un polyester modifié avec 20 à 35% en poids de DCPD.

4. Plaque selon l'une quelconque des revendications 1 à 3, caractérisée en ce que le composé contenant un (ou plusieurs) groupe vinylique est un composé aromatique vinylique ou un acrylate contenant moins de 30 atomes de carbone.

5. Plaque selon l'une quelconque des revendications 1 à 4, caractérisée en ce que le composé contenant un (ou plusieurs) groupe vinylique est liquide à la température ambiante.

6. Procédé de production d'une plaque transparente en introduisant une matière durcissable dans un moule et en la faisant durcir par polymérisation, caractérisé en ce qu'on utilise en tant que matière durcissable une matière à base d'un polyester comprenant au moins deux insaturations alpha,bêta-éthyléniques et ayant une masse moléculaire d'au moins 500 et un composé contenant un (ou plusieurs) groupes vinylique et, en ce qu'on fait durcir le mélange par poiymérisation radicalaire.

7. Procédé selon la revendication 6, caractérisé en ce qu'on amorce la polymérisation radicalaire par un système initiateur chimique photosensible.

8. Procédé selon la revendication 6, caractérisé en ce qu'on amorce la polymérisation radicalaire par un système initiateur chimique thermosensible.

9. Procédé selon l'une quelconque des revendications 6 à 8, caractérisé en ce que la matière durcissable comprend un système initiateur photosensible et un système initiateur thermosensible et on la fait durcir dans le moule pendant moins de 10 minutes à l'aide de lumière et, ensuite on la soumet à un post-durcissement en dehors du moule pendant un maximum d'une demi-heure à une température entre 120 et 240°C.

10. Support d'information lisible par voie optique comprenant une plaque transparente en une matière à réseau tridimensionnel , dont une face porte un milieu réfléchissant, caractérisé en ce que le réseau tridimensionnel consiste en un mélange durci à base d'un polyester comprenant au moins deux insaturations alpha,bêta-éthyiéniques et ayant une masse moléculaire d'au moins 500 et un composé contenant un (ou plusieurs) groupe vinylique.

## Ansprüche

1. Transparente Platte für einen optisch auslesbaren Informationsträger aus einem Material, welches ein dreidimensionales Netzwerk aufweist, dadurch gekennzeichnet, daß das dreidimensionale Netzwerk aus einer ausgehärteten Mischung auf Basis eines Polyesters, der mindestens zwei $\alpha$, $\beta$-äthylenische Ungesättigtheiten aufweist und eine Molekularmasse von mindestens 500 hat, und einer Verbindung, welche eine oder mehrere Vinylgruppen enthält, besteht.

2. Platte nach Anspruch 1, dadurch gekennzeichnet, daß das Polymer eine Molekularmasse von weniger als 400 pro Doppelbindung hat.

3. Platte nach Anspruch 1 oder 2, dadurch gekennzeichnet, daß als Polymer ein mit 20-35% Masse DCPD modifizierter Polyester verwendet ist.

4. Platte nach einem der Ansprüche 1 bis 3, dadurch gekennzeichnet, daß die eine oder mehrere Vinylgruppen enthaltende Verbindung eine vinylaromatische- oder Acrylatverbindung mit weniger als 30 Kohlenstoffatomen ist.

5. Platte nach einem der Ansprüche 1 bis 4, dadurch gekennzeichnet, daß die Verbindung, welche eine oder mehrere Vinylgruppen enthält, bei Raumtemperatur flüssig ist.

6. Verfahren zur Herstellung einer transparenten Platte, durch Einführen eines aushärtbaren Materials in eine Form und Härten desselben durch Polymerisation, dadurch gekennzeichnet, daß ein Material auf Basis eines Polyesters, welcher wenigstens zwei $\alpha$, $\beta$-äthylenische Ungesättigtheiten aufweist und eine Molekularmasse von mindestens 500 hat, und einer Verbindung, welche eine oder mehrer Vinylgruppen enthält, als härtbares Material verwendet wird, und daß die Mischung durch Radikal-Polymerisiation gehärtet wird.

7. Verfahren nach Anspruch 6, dadurch gekennzeichnet, daß die Radikal-Polymerisation durch ein lichtsensitives chemisches Initiatorsystem ausgelöst wird.

8. Verfahren nach Anspruch 6, dadurch gekennzeichnet, daß die Radikal-Polymerisiation durch ein temperatursensitives chemisches Initiatorsystem ausgelöst wird.

9. Verfahren nach einem der Ansprüche 6 bis 8, dadurch gekennzeichnet, daß das härtbare Material ein lichtsensitives Initiatorsystem und ein temperatursensitives Initiatorsystem enthält und in der Form für weniger als 10 Minuten mit Hilfe von Licht gehärtet wird und dann außerhalb der Form für bis zu einer halben Stunde bei einer Temperatur zwischen 120° C und 240° C nachgehärtet wird.

10. Optisch auslesbarer Informationsträger, welcher eine transparente Platte aus einem Material mit einem dreidimensionalen Netzwerk aufweist, deren eine Seite mit einem reflektierenden Medium versehen ist, dadurch gekennzeichnet, daß das dreidimensionale Netzwerk aus einer gehärteten Mischung auf Basis eines Polyesters, der mindestens zwei $\alpha$, $\beta$-äthylenische Ungesättigtheiten aufweist und eine Molekularmasse von mindestens 500 hat, und einer Verbindung, welche eine oder mehrere Vinylgruppen enthält, besteht.